# EUROPEAN PATENT APPLICATION

(11) **EP 1 512 922 A1**
(43) Date of publication of application: **09.03.2005**
(21) Application number: 03447222.5
(22) Date of filing: 03.09.2003
(51) Int. Cl.: F24J 2/26, F24J 2/04, F24J 2/46, F24J 2/51

(54) **Thermal energy collector and device having such a collector**

(71) Applicant: Raes, Francis, 7501 Orcq (BE)
(72) Inventor: Raes, Francis, 7501 Orcq (BE)
(74) Representative: Cauchie, Daniel

(57) **Abrégé**

L'invention se rapporte à un capteur d'énergie thermique, en particulier d'énergie solaire, du genre comprenant un revêtement thermo-absorbant et des moyens pour transmettre la chaleur absorbée par ledit revêtement à un fluide récupérateur d'énergie thermique circulant au voisinage de celle-ci, caractérisé en ce qu'un support, formé du revêtement thermo-absorbant (1) appliqué sur une face d'une couche de matériau thermo-isolant (2), comporte une rainure (3), pratiquée à partir de la face externe dudit revêtement thermo-absorbant, dans laquelle est encastré un conduit (4) du fluide récupérateur d'énergie thermique de manière à affleurer ou sensiblement affleurer la face externe du revêtement thermo-absorbant, la face opposée de la couche thermo-isolante étant éventuellement munie d'un revêtement de parement.

L'invention concerne également une pluralité de capteurs ci-dessus formant module collecteur d'énergie thermique ainsi qu'une pluralité de tels modules formant dispositif collecteur d'énergie thermique dont le conduit fermé étanche véhicule un fluide caloporteur.

## Description

La présente invention se rapporte, d'une manière générale, à un capteur d'énergie thermique en particulier d'énergie solaire.

Plus précisément, l'invention concerne un capteur d'énergie thermique du genre comprenant un revêtement thermo-absorbant c'est-à-dire doué d'un fort pouvoir d'absorption vis-à-vis de l'énergie thermique notamment du rayonnement solaire, et des moyens pour transmettre la chaleur absorbée par ledit revêtement à un fluide récupérateur d'énergie thermique circulant au voisinage de celui-ci.

La récupération d'énergie thermique en particulier d'origine solaire met généralement en oeuvre des capteurs à effet de serre disposés sur le toit ou les façades de bâtiments provoquant à la fois problèmes architecturaux et inesthétisme.

D'autres solutions ont été proposées qui consistent à intégrer les moyens de récupération thermique à l'enveloppe du bâtiment et notamment à la charpente.

A ce titre, on peut citer le brevet FR 250 7645 qui décrit notamment des réseaux capteurs d'énergie intégrés dans un élément de couverture porté par une charpente en bois.

Ces réseaux comprennent des conduits qui véhiculent un fluide caloporteur, ces conduits étant encastrés dans des rainures exécutées dans la face externe d'un support constitué de plaques en contre-plaqué revêtues d'une feuille d'aluminium. Ces rainures sont cylindriques, d'un diamètre au plus égal à celui des conduits et d'une profondeur inférieure à ce diamètre. En outre, la paroi de ces rainures est enduite d'un produit thermiquement conducteur et collant tandis que la plaque en contre-plaqué est fixée sur une couche thermiquement isolante.

Un élément modulaire d'un système récupérateur d'énergie thermique de ce type présente toutefois l'inconvénient de faire appel à une pluralité de constituants représentés par une feuille d'aluminium, un conduit cylindrique, une substance à la fois adhésive et rendue thermiquement conductrice par l'ajout de particules métalliques, une plaque en contre-plaqué et une couche de matériau thermiquement isolant.

La présente invention a pour but de proposer un capteur d'énergie thermique, du type indiqué précédemment, qui permet de remédier aux inconvénients cités ci-dessus, c'est-à-dire qui soit plus simple dans sa conception fiable et aisément réalisable tout en étant doué des qualités des systèmes récupérateur d'énergie thermique antérieurs.

Pour atteindre ce but, le capteur d'énergie thermique selon l'invention est caractérisé en ce qu'un support, formé du revêtement thermo-absorbant appliqué sur une face d'une couche d'un matériau thermiquement isolant ou thermo-isolant, comporte une rainure, pratiquée à partir de la face externe dudit revêtement thermo-absorbant, dans laquelle est encastré un conduit du fluide récupérateur d'énergie thermique de manière à affleurer ou sensiblement affleurer la face externe du revêtement thermo-absorbant.

Selon une autre caractéristique de l'invention, la rainure est de largeur au plus égale à celle du conduit.

Selon une caractéristique supplémentaire de l'invention, la face de la couche de matériau thermo-isolant opposée à la face supportant le revêtement thermo-absorbant, est munie d'un revêtement de parement formé d'une ou de plusieurs feuilles supplémentaires.

En pratique, une multiplicité de capteurs selon l'invention sont habituellement réunis en un faisceau par l'intermédiaire de leurs conduits du fluide récupérateur d'énergie thermique, ci-après « conduits récupérateurs », branchés à des conduits de circulation du fluide de manière à former un élément modulaire, une multiplicité de tels éléments formant un dispositif collecteur d'énergie thermique fonctionnant en circuit fermé.

En conséquence, l'invention se rapporte également à un module collecteur d'énergie thermique, caractérisé en ce qu'il réunit une pluralité de capteurs d'énergie thermique selon l'invention disposés de manière à former un ensemble unitaire, les conduits récupérateurs étant branchés en parallèle entre deux conduits collecteurs espacés pour la circulation respectivement d'un fluide froid et d'un fluide réchauffé.

Ces capteurs sont réunis par l'intermédiaire des bords longitudinaux de leur revêtement thermo-absorbant, de leur couche thermo-isolante et, le cas échéant, de leur revêtement de parement, c'est-à-dire des bords parallèles ou sensiblement parallèles aux conduits récupérateurs, ces bords pouvant être solidarisés par simple juxtaposition ou au contraire par des moyens quelconques de retenue tels que collage, accrochage, agrafage ou soudure.

Toutefois, de manière habituelle et préférentielle chacun des revêtements thermo-absorbants, de même que chacune des couches thermo-isolantes ainsi que le cas échéant chacun des revêtements de parement d'une multiplicité de capteurs juxtaposés par leurs bords transversaux respectifs sont fusionnés en couche et revêtements continus formant un seul support, du genre panneau support, pour une pluralité de conduits, l'ensemble ainsi configuré constituant un module collecteur d'énergie thermique préféré selon l'invention.

Par conséquent, l'invention concerne également un module collecteur d'énergie thermique, caractérisé en ce qu'un panneau support formé d'un revêtement thermo-absorbant continu appliqué sur une face d'une couche continue de matériau thermo-isolant, la face opposée étant pourvue d'un revêtement de parement, comporte une pluralité de rainures pratiquées à partir de la face externe dudit revêtement thermo-absorbant, dans lesquelles sont encastrés des conduits récupérateurs de manière à affleurer ou sensiblement affleurer la face externe du revêtement thermo-absorbant, lesdits conduits récupérateurs étant branchés en parallèle entre deux conduits collecteurs espacés pour la circulation respectivement d'un fluide froid et d'un fluide réchauffé.

Ces conduits récupérateurs sont formés à partir de matière thermoplastique alliant à la fois souplesse et rigidité. Il s'agit habituellement d'un polymère ou copolymère synthétique généralement oléfinique par exemple un copolymère propylénique en particulier le polypropylène de type 2, un polybutène ou un polyéthylène tel que le polyéthylène réticulé haute densité (PER) ou encore le chlorure de polyvinyle.

D'autre part, ces conduits se présentent ordinairement sous la forme de tuyaux cylindriques, éventuellement munis d'un revêtement protecteur anti-UV par exemple une gaine en aluminium, mais peuvent adopter d'autres formes. Il peut s'agir par exemple de tuyaux de section carrée, rectangulaire ou circulaire déformée notamment de section ovoïde.

La longueur de ces conduits est variable habituellement comprise entre 1 et 50 m et leur diamètre intérieur lorsqu'il s'agit de tuyaux cylindriques est également variable, ordinairement compris entre 5 et 15 mm, de l'ordre de 10 mm.

Les conduits collecteurs, quant à eux résultent de la réunion de diverses pièces d'assemblage.

En conséquence, selon une autre caractéristique de l'invention, les conduits collecteurs des modules collecteurs sont formés d'une pluralité de pièces d'assemblage présentant des extrémités de configuration mâle formant tubulures de raccordement et des extrémités de configuration femelle formant manchons d'emboîtement.

Plus précisément, les conduits collecteurs comprennent des pièces d'assemblage ci-dessus en forme de T ou de L, deux extrémités des pièces d'assemblage en T étant soit de configuration mâle soit de configuration femelle, la troisième extrémité étant respectivement de configuration femelle ou mâle tandis que l'une des extrémités des pièces d'assemblage en L est de configuration mâle, l'autre étant de configuration mâle ou femelle.

Ces pièces d'assemblage, de diamètre intérieur supérieur à celui des conduits récupérateurs sont préférentiellement constituées de matière synthétique thermoplastique rigide à semi-rigide coulée sous pression, par exemple un polymère ou copolymère oléfinique tel que par exemple le polyéthylène.

Les pièces d'assemblage ci-dessus sont pourvues à leurs extrémités de moyens d'étanchéité.

Habituellement, l'extrémité mâle de ces pièces est munie d'une gorge de verrouillage répartie radialement sur sa face périphérique externe et pourvue d'une garniture d'étanchéité tandis que l'extrémité femelle comprend un moyen de retenue adapté pour coiffer ce manchon de préférence une bague de sertissage, par exemple en acier inoxydable.

La garniture d'étanchéité ci-dessus est généralement constituée d'un joint d'étanchéité, par exemple en élastomère, logé dans la gorge. Ce joint peut prendre différentes formes en relation avec la configuration de la tubulure de raccordement. Il peut s'agir par exemple d'un joint annulaire en particulier un joint torique.

D'autre part, les extrémités des conduits récupérateurs, qui constituent également des embouts femelles, sont coiffés également d'un moyen de retenue tel qu'une bague de sertissage.

Lors de la jonction des différents conduits récupérateurs et pièces d'assemblage en vue de l'élaboration d'un module collecteur selon l'invention, les tubulures de raccordement de ces pièces d'assemblage munies de leurs garnitures d'étanchéité sont engagées à force dans les emboîtures des manchons tubulaires de ces mêmes pièces ou aux extrémités des conduits récupérateurs puis les moyens de retenue chevauchant ces manchons ou extrémités de conduits sont enserrés sur ceux-ci.

Le revêtement thermo-absorbant est habituellement formé d'une ou de plusieurs feuilles thermo-absorbantes elles-mêmes constituées d'un ou de plusieurs matériaux doués d'un fort pouvoir d'absorption vis-à-vis de l'énergie thermique.

Préférentiellement, ce revêtement se limite à une seule feuille thermo-absorbante constituée d'un métal ou d'un alliage métallique thermo-absorbant, cette feuille pouvant prendre la forme d'une tôle en acier galvanisé ou en métal non ferreux tel que l'aluminium ou le cuivre.

De même, la couche thermo-isolante est généralement formée d'une ou de plusieurs feuilles de matière thermo-isolante.

Toutefois, cette couche thermo-isolante se limite, de préférence, à une seule feuille thermo-isolante généralement formée d'un matériau non hygroscopique constitué de cellules fermées. Il peut s'agir en l'occurrence d'une matière naturelle ou synthétique tel que le polyuréthane par exemple le polyuréthane expansé.

Enfin, le revêtement de parement peut prendre la forme par exemple d'une membrane naturelle ou synthétique, un panneau, renforcé ou pas, en bois, bois aggloméré, plâtre, tôle en acier galvanisé ou non ou en métal non ferreux.

Quant au fluide récupérateur d'énergie thermique ou caloporteur, il s'agit habituellement d'un liquide, en général de l'eau glycolée ou non et sa circulation dans le dispositif collecteur d'énergie thermique peut être assurée par une pompe.

De manière à former un module collecteur préféré selon l'invention, les conduits récupérateurs engagés dans des rainures pratiquées dans un panneau support sont généralement répartis en un faisceau de conduits rectilignes parallèles ou sensiblement parallèles reliés par leurs extrémités respectives à des conduits collecteurs eux-mêmes disposés de préférence de manière parallèle ou sensiblement parallèle entre eux.

Toutefois, d'autres dispositions peuvent être adoptées, les conduits récupérateurs pouvant par exemple se présenter sous la forme de serpentins.

L'invention concerne également un dispositif collecteur d'énergie thermique caractérisé en ce qu'il est constitué d'une multiplicité de modules selon l'invention dont les panneaux supports sont réunis à leurs extrémités et dont les conduits collecteurs sont reliés à des conduits principaux pour former un conduit fermé étanche à l'intérieur duquel se trouve le fluide récupérateur qui évacue l'énergie captée.

Les panneaux supports des différents modules préférés selon l'invention, intervenant dans l'élaboration du dispositif collecteur d'énergie thermique, peuvent être assemblés, comme dans le cas des capteurs d'énergie thermique selon l'invention, par l'intermédiaire des bords longitudinaux des revêtements thermo-absorbants ainsi que des bords longitudinaux des couches thermo-isolantes ou des revêtements de parement, c'est-à-dire des bords parallèles ou sensiblement parallèles aux conduits récupérateurs, ces bords pouvant être solidarisés par simple juxtaposition ou au contraire par des moyens quelconques de retenue.

En fait, le mode d'assemblage des panneaux supports peut varier selon la configuration adoptée pour les modules collecteurs et peut comprendre des modes d'assemblage par collage, accrochage, soudure, clouage, vissage, agrafage ou autres.

Toutefois, de manière habituelle et préférentielle, et selon une caractéristique supplémentaire de l'invention, les panneaux supports des modules en question sont assemblés, en faisant coopérer des moyens de retenue d'un premier panneau support avec des moyens complémentaires de retenue d'un second panneau support.

En particulier et selon une autre caractéristique de l'invention, l'assemblage des panneaux supports en question peut être assuré par engagement d'un crochet d'extrémité formé par un débordement longitudinal du revêtement thermo-absorbant d'un premier panneau support, dans une rainure d'extrémité située le long d'un bord longitudinal d'un second panneau support et ménagée, dans l'ensemble formé par le revêtement thermo-absorbant et la couche de matériau thermo-isolant de ce second panneau support.

Cet assemblage de panneaux supports, qui s'opère essentiellement au niveau du revêtement thermo-absorbant, peut être renforcé par l'intermédiaire de la couche thermo-isolante et éventuellement du revêtement de parement lorsqu'il est présent. Toutefois, lorsque ce panneau support est pourvu d'un tel revêtement de parement, l'assemblage de deux panneaux de ce type intervient de préférence uniquement au niveau des revêtements thermo-absorbant et de parement.

Dans ce cas, l'assemblage supplémentaire des panneaux au niveau des revêtements de parement peut être envisagé par des moyens de retenue tels que collage, clouage, vissage, agrafage, soudure ou encore accrochage par engagement d'un crochet d'extrémité d'un premier panneau support dans une rainure d'extrémité d'un second panneau support tel que décrit précédemment au niveau des revêtements thermo-absorbants.

Selon une caractéristique supplémentaire du dispositif collecteur d'énergie thermique selon l'invention, les conduits collecteurs des modules collecteurs sont branchés en parallèle respectivement sur un conduit principal d'entrée destiné à amener le fluide froid et un conduit principal de sortie destiné à la récupération du fluide réchauffé.

Les conduits principaux ci-dessus comprennent essentiellement des sections de conduits réunies par des pièces de liaison.

Ces sections de conduits sont analogues aux conduits récupérateurs. Elles sont formées des mêmes matières thermoplastiques, peuvent prendre les mêmes formes et longueurs et sont munies à leurs extrémités des mêmes moyens d'étanchéité. Toutefois, lorsqu'il s'agit de tuyaux cylindriques, leurs diamètres intérieurs seront supérieurs à ceux des conduits récupérateurs et des conduits collecteurs.

En outre, elles peuvent être pourvues également, si nécessaire, d'un revêtement protecteur anti-UV.

La liaison entre les conduits collecteurs et les sections de conduits principaux ci-dessus peut être effectuée par soudure mais plus généralement par l'intermédiaire d'une pièce de liaison.

Selon une caractéristique supplémentaire de l'invention, les conduits collecteurs des modules collecteurs sont branchés sur des sections de conduits principaux par l'intermédiaire d'une pièce de liaison comportant trois extrémités de configuration mâle formant tubulures de raccordement.

Cette pièce de liaison est constituée de matière synthétique thermoplastique analogue à celle utilisée pour les pièces d'assemblage des conduits collecteurs et est munie, comme les tubulures de raccordement de ces pièces d'assemblage, de moyens d'étanchéité analogues.

Lors de la jonction entre les conduits collecteurs et les conduits principaux en vue de l'élaboration d'un dispositif collecteur selon l'invention, les tubulures de raccordement de cette pièce de liaison seront engagées à force dans les emboîtures des manchons tubulaires des pièces d'assemblage des conduits collecteurs ou aux extrémités des sections de conduits principaux et les moyens de retenue chevauchant ces manchons ou extrémités de sections de conduits seront enserrés sur ceux-ci.

Les modules collecteurs selon l'invention sont habituellement intégrés à la construction du bâtiment au sein des matériaux qui en forment l'enveloppe étanche et thermiquement isolante.

Ainsi, une pluralité de modules de ce genre peut être utilisée pour la constitution d'un dispositif collecteur d'énergie thermique en particulier d'origine solaire à poser comme sous-toiture d'une toiture formée par exemple d'un assemblage de tuiles ou d'ardoises naturelles ou en fibre-ciment.

Dans ce cas, la face inférieure de chacun des modules est préférentiellement recouverte d'une ou de plusieurs feuilles de parement telle qu'une membrane synthétique ou naturelle en particulier une membrane bitumeuse.

Par « face inférieure » ou « face supérieure », on entend dans le cadre de la présente invention, une face d'un élément matériel intervenant dans la construction d'un bâtiment respectivement en regard de l'intérieur de ce bâtiment ou en regard de l'extérieur de ce bâtiment.

Alternativement, un tel dispositif collecteur d'énergie thermique peut trouver usage comme couverture de toit autoportante avec face inférieure visible ou pas.

Dans ce cas, la face supérieure de ce dispositif est en contact étroit avec une couverture extérieure par exemple en zinc ou sous forme d'une membrane synthétique ou naturelle par exemple une membrane bitumeuse traditionnelle tandis que la face inférieure peut être recouverte d'une ou de plusieurs feuilles de parement supplémentaire telle qu'un panneau renforcé ou pas par exemple en bois, bois aggloméré, plâtre ou encore une tôle en acier galvanisé ou non ou en métal non ferreux, profilée en fonction de la charge et de la portée du module.

Le dispositif selon l'invention peut être utilisé en relation avec une couverture de toiture dont la pente varie de 0° à 90°. Dans le cas où cette pente vaut 90°, c'est-à-dire dans le cas de parois verticales, le dispositif en question sera utilisé essentiellement en relation avec des cloisons ou murs extérieurs d'une construction.

De manière à récupérer l'énergie thermique maximale absorbée par la toiture ou la couverture extérieure, les modules collecteurs selon l'invention formant le dispositif collecteur d'énergie seront intimement juxtaposés à cette toiture ou couverture extérieure de manière à privilégier un maximum de zones de contact entre la face supérieure du dispositif et la face inférieure de la toiture ou de la couverture extérieure.

Dans le cas d'une toiture formée d'un assemblage de tuiles, on utilisera de préférence des tuiles à face inférieure plane ou sensiblement plane munies de moyens d'accrochage au dispositif collecteur selon l'invention ou encore des tuiles de configuration standard ou traditionnelle qui seront accrochées au dispositif collecteur par l'intermédiaire d'un moyen de retenue supplémentaire.

En conséquence, selon une autre caractéristique de l'invention, le dispositif collecteur d'énergie est muni d'un moyen de retenue de tuiles pourvues d'un talon, comprenant un profilé fixé au revêtement thermo-absorbant, profilé dont l'un des bords qui s'étend en un débordement longitudinal, formant aile repliée sur elle-même, supporte la tuile et est en butée contre le talon de celle-ci.

En outre, dans le cas d'une toiture formée d'un assemblage d'ardoises, l'accrochage de celles-ci au dispositif collecteur d'énergie selon l'invention sera préférentiellement assuré par un moyen de retenue supplémentaire à deux éléments, l'un fixé à l'ardoise, l'autre fixé au revêtement thermo-absorbant, ces deux éléments étant solidarisés l'un à l'autre.

En conséquence, selon une caractéristique supplémentaire de l'invention, le dispositif collecteur d'énergie est muni d'un moyen de retenue d'ardoises pourvues d'un orifice, comprenant deux éléments, l'un constitué d'un profilé fixé au revêtement thermo-absorbant et recourbé longitudinalement en pince à deux branches, l'autre constitué d'une lamelle munie d'une tige pour engagement dans l'orifice de l'ardoise, cette lamelle étant destinée à être encliquetée entre les branches de la pince.

L'invention sera mieux comprise et d'autres buts, caractéristiques et avantages de celle-ci apparaîtront plus clairement au cours de la description explicative qui va suivre faite en référence aux dessins annexés donnés uniquement à titre d'exemples illustrant différents modes de réalisation de l'invention et dans lesquels :
- la figure 1 est une vue en coupe frontale d'un capteur d'énergie thermique selon l'invention
- la figure 2 est une vue en plan d'un module collecteur d'énergie thermique selon l'invention munis de conduits principaux
- la figure 3 est une vue d'une coupe frontale A-A du module à la figure 2
- la figure 4 est une vue d'une coupe longitudinale du module à la figure 2
- les figures 5 à 7 sont des vues en coupe frontale de différents modes de réalisation de modules collecteurs d'énergie thermique
- la figure 8 est une vue en coupe de moyens d'accrochage de deux modules collecteurs d'énergie thermique
- la figure 9 est une vue en coupe longitudinale d'un mode d'assemblage de conduits d'un module collecteur d'énergie munis de conduits principaux pour pose en dehors de noues ou d'arêtiers
- la figure 10 est une vue en coupe A'-A' de l'assemblage de conduits à la figure 9
- la figure 11 est une vue en coupe longitudinale d'une portion d'assemblage de conduits récupérateurs et d'un conduit collecteur pour pose au niveau de noues ou d'arêtiers
- la figure 12 est une vue en coupe frontale d'une portion d'assemblage d'un conduit collecteur et d'un conduit principal utilisables au niveau de noues ou d'arêtiers
- les figures 13 à 18 sont des représentations de pièces d'assemblage de conduits collecteurs ou de liaison de conduits principaux
- la figure 19 est une vue en coupe longitudinale d'un versant d'une toiture munie d'un dispositif collecteur d'énergie thermique selon l'invention et recouverte de tuiles
- la figure 20 est une vue en plan d'un moyen de fixation d'une tuile
- la figure 21 est une vue en coupe longitudinale d'une tuile solidarisée à un dispositif collecteur d'énergie thermique selon l'invention
- la figure 22 est une vue en coupe longitudinale d'un versant d'une toiture munie d'un dispositif collecteur d'énergie thermique selon l'invention et recouverte d'ardoises
- la figure 23 est une vue en coupe d'une ardoise solidarisée à un dispositif collecteur d'énergie thermique selon l'invention par un moyen de retenue à double éléments
- les figures 24 et 25 sont des vues en plan des deux éléments du moyen de retenue d'ardoises
- la figure 26 est une vue en plan d'un élément particulier du moyen de retenue d'ardoises
- la figure 27 est une vue en coupe longitudinale de l'élément à la figure 26
- les figures 28 et 29 sont des vues partielles en coupe frontale de modules collecteurs d'énergie recouverts respectivement d'une membrane bitumeuse ou d'une feuille de zinc
- la figure 30 est une vue schématique d'un bâtiment intégrant un dispositif collecteur d'énergie thermique fonctionnant en circuit fermé.

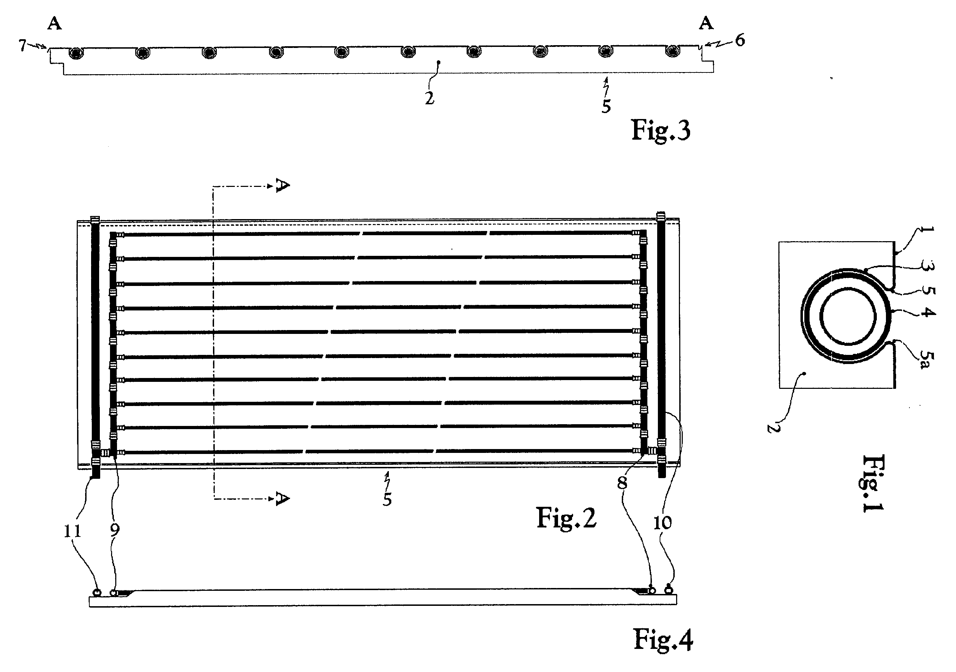

Tel que représenté à la figure 1, le capteur d'énergie thermique comprend un revêtement thermo-absorbant 1 constitué d'une tôle en acier galvanisé fixée par adhérence mécanique sur une couche 2 de matériau thermo-isolant en polyuréthane expansé d'une densité d'environ 40 kg/m³.

La figure 1 montre également une rainure 3 sensiblement cylindrique obtenue par emboutissage dans le panneau support formé par la tôle 1 thermo-absorbante et par la couche 2 de matériau thermo-isolant. En outre, cette tôle 1 épouse en totalité le contour de la rainure dans laquelle est encastré à force un conduit cylindrique 4 par exemple en polypropylène, capable de véhiculer de l'eau glycolée comme fluide caloporteur.

Ce conduit 4 est de diamètre intérieur de l'ordre de 9 à 10 mm et de diamètre extérieur égal ou sensiblement égal à la profondeur de la rainure 3 de façon à affleurer ou sensiblement affleurer le niveau de la tôle 1 situé à l'extérieur de cette rainure. Ce diamètre extérieur est de préférence de l'ordre de 15 mm.

D'autre part, ce conduit 4 est sécurisé dans son logement grâce à un pinçage longitudinal des arêtes 5 et 5a définies par l'emboutissage. Ce pinçage peut être étendu sur la totalité de la longueur des arêtes ou au contraire sur une ou plusieurs portions de longueur définies le long de ces arêtes.

Aux figures 2 à 4, on a représenté un module 5 collecteur d'énergie thermique tel que configuré dans un dispositif collecteur d'énergie thermique.

En fait, ce module 5, d'une largeur d'environ 1000 mm, est formé de 10 capteurs d'énergie représentés à la figure 1 et de moyens de retenue 6, 7 visibles à la figure 3, qui seront explicités plus en détail par la suite.

Ces capteurs sont répartis, de manière équidistante et parallèle, en un ensemble, l'écartement entre deux conduits 4 étant généralement d'environ 100 mm. Toutefois cet écartement peut être modifié selon le type de recouvrement de toiture utilisé. Cet ensemble est alors relié d'une part à un conduit collecteur 8 par exemple de fluide froid et d'autre part à un second conduit collecteur 9, parallèle au premier, par exemple pour la récupération de fluide réchauffé. Ces conduits collecteurs 8, 9, dont le diamètre intérieur sera calculé en fonction de la longueur et du diamètre intérieur des conduits récupérateurs 4 sont eux-mêmes connectés à des conduits principaux respectivement 10, 11, lorsque ce module est intégré dans un dispositif collecteur d'énergie thermique selon l'invention.

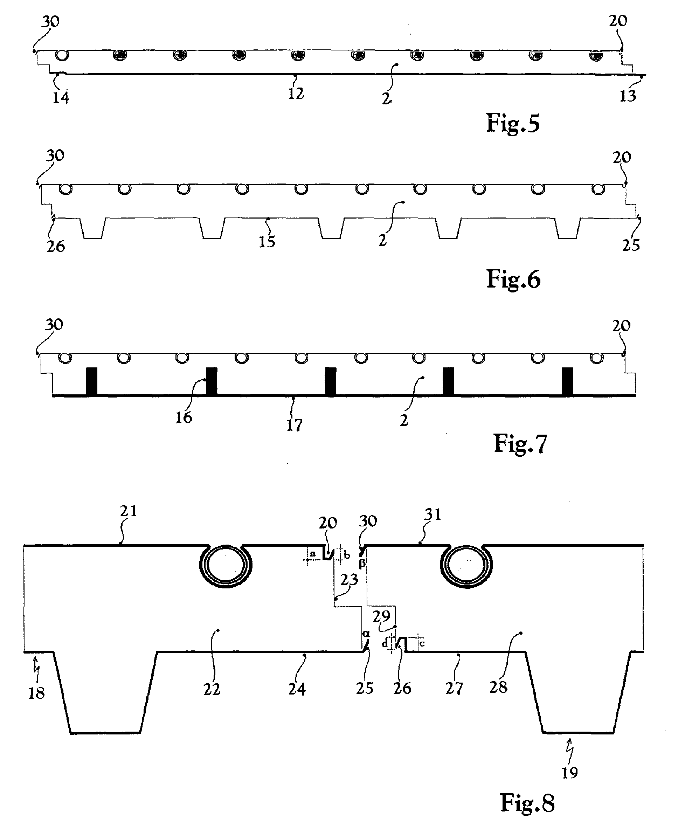

Le module 5, selon l'emplacement qui lui est conféré au sein du bâtiment, peut être configuré de diverses manières. Ainsi, tel que représenté à la figure 5, ce module peut prendre la forme d'un panneau de sous-toiture dont la couche thermo-isolante 2, d'une épaisseur d'au moins 45 mm, comporte sur sa face inférieure une feuille de parement 12 sous la forme d'une membrane bitumeuse fixée par collage. Cette membrane s'étend extérieurement en un débordement 13 courant le long du bord inférieur d'une des parois latérales du panneau support formé par la tôle thermo-absorbante et la couche thermo-isolante tandis qu'elle subit, au niveau du bord inférieur de la paroi opposée, un léger retrait 14 équivalent à son épaisseur et d'une largeur sensiblement équivalente à la largeur du débordement 13.

Un tel panneau de sous-toiture peut être utilisé avec recouvrement d'ardoises ou de tuiles ou recouvrement métallique par exemple en zinc, à la fois en construction neuve ou en rénovation de constructions existantes.

D'une autre manière et tel que représenté à la figure 6, ce module est configuré en panneau de couverture auto-portant muni d'une tôle de parement 15 par exemple en acier galvanisé, qui revêt la face inférieure d'une couche thermo-isolante 2 d'une épaisseur d'environ 80 mm, cette tôle étant profilée en fonction de la charge et de la portée. Toutefois, à la figure 7, ce même module formant panneau de couverture auto-portant fait corps avec une pluralité de chevrons 16 et est garni sur la face inférieure de sa couche thermo-isolante 2, d'une épaisseur généralement de 80 à 160 mm, d'une feuille de parement 17 du genre panneau en bois, bois aggloméré, plâtre ou tôle d'acier ou similaire recouvrant à la fois cette face inférieure et la face inférieure des chevrons.

Ces panneaux de couverture auto-portants peuvent être utilisés pour la constitution de toitures plates ou inclinées dont le recouvrement est formé d'une membrane naturelle ou synthétique (membrane bitumeuse), de tuiles, d'ardoises ou d'un revêtement métallique, par exemple en zinc, à la fois en construction neuve ou en rénovation de constructions existantes.

Un module collecteur d'énergie thermique selon l'invention étant constitué en fait d'un panneau support et d'une pluralité de conduits, la réunion entre eux de deux ou plusieurs modules, en vue de l'élaboration d'un dispositif collecteur d'énergie thermique, nécessitera d'une part l'assemblage de leurs panneaux supports et d'autre part la jonction des différents conduits intervenant dans l'ensemble de panneaux supports envisagés.

Un mode de réalisation avantageux d'un assemblage de panneaux supports de modules collecteurs par l'intermédiaire de leurs revêtements thermo-absorbants, est illustré à la figure 8 dans le cas particulier de panneaux supports munis d'un revêtement de parement rigide, ci-dessus les panneaux supports 18 et 19.

En se référant à cette figure 8, on constate que le panneau support 18 est muni d'une rainure 20 d'extrémité, ménagée dans l'ensemble formé par la tôle 21 et la couche de matériau thermo-isolant 22 et courant le long de l'arête supérieure de la paroi latérale 23 de ce panneau support.

D'autre part, la tôle de parement 24 à la face inférieure de ce panneau support 18 s'étend en un débordement longitudinal 25 le long de l'arête inférieure de la paroi 23 créant ainsi un angle aigu α avec cette paroi et, en conséquence, la configuration d'un crochet.

A l'inverse le panneau support 19 comporte une rainure 26 d'extrémité ménagée dans l'ensemble formé par la tôle de parement 27 et la couche thermo-isolante 28 et courant le long de l'arête inférieure de la paroi latérale 29 tandis qu'un débordement longitudinal 30 de la tôle 31 crée un angle aigu β avec cette paroi 29 et, en conséquence, une configuration de crochet.

Habituellement, les angles α et β sont égaux ou sensiblement égaux.

On remarque en outre, en se référant à la figure 8, que la hauteur b de la paroi de la rainure 20, adjacente à la paroi latérale 23, est inférieure à la hauteur a de la paroi en regard. De manière analogue, la hauteur d de la paroi de la rainure 26, adjacente à la paroi latérale 29 est également inférieure à la hauteur c de la paroi en regard.

Ces hauteurs b et d seront déterminées de manière telle que lors de l'assemblage des panneaux supports 18 et 19, les niveaux des tôles 21 et 31 d'une part et les niveaux des tôles 24 et 27 d'autre part soient identiques ou sensiblement identiques.

D'autre part, la figure 8 montre que la paroi 23 subit sur sa hauteur un décrochement sensiblement à angle droit alors que la paroi 29 présente un décrochement complémentaire au premier de sorte qu'aucune solution de continuité n'existe lors d'un rapprochement par juxtaposition des parois en question.

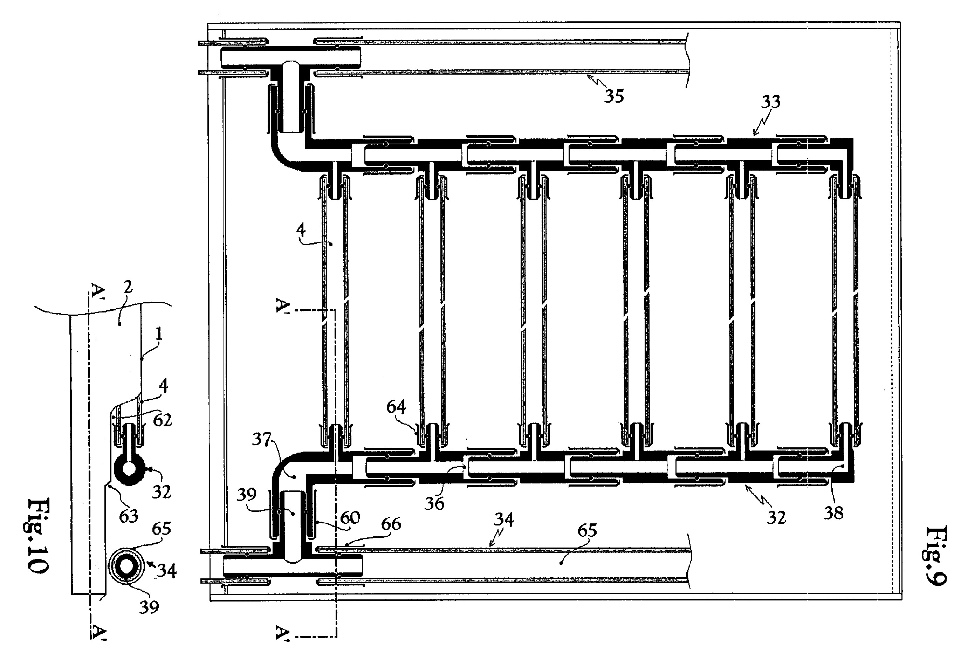

Quant à la connexion des différents conduits intervenant dans l'élaboration du module collecteur d'énergie, celle-ci peut être réalisée, tel que représenté aux figures 9 à 12, au moyen de pièces d'assemblage reliant entre eux, par leurs extrémités adjacentes, les conduits récupérateurs 4, disposés parallèlement, ces pièces formant entre elles deux conduits collecteurs 32, 33. Lors de l'élaboration d'un dispositif collecteur d'énergie, ces conduits collecteurs sont eux-mêmes reliés à des conduits principaux, le conduit collecteur 32 à un conduit principal 34 par exemple pour l'amenée de fluide froid et le conduit 33 à un conduit principal 35 par exemple pour la récupération de fluide réchauffé, cette jonction s'opérant également par l'intermédiaire de pièces de liaison.

Dans le cas du module collecteur représenté aux figures 9 et 10, c'est-à-dire un module non destiné à une pose au niveau de noues ou d'arêtiers, les conduits récupérateurs 4 sont reliés entre eux au moyen de pièces d'assemblage 36 et pièces terminales d'assemblage 37, 38 de manière à créer les conduits collecteurs 32, 33 alors que la liaison entre ces conduits collecteurs et les conduits principaux, lors de l'élaboration du dispositif collecteur, s'établit par l'intermédiaire de pièces de liaison 39.

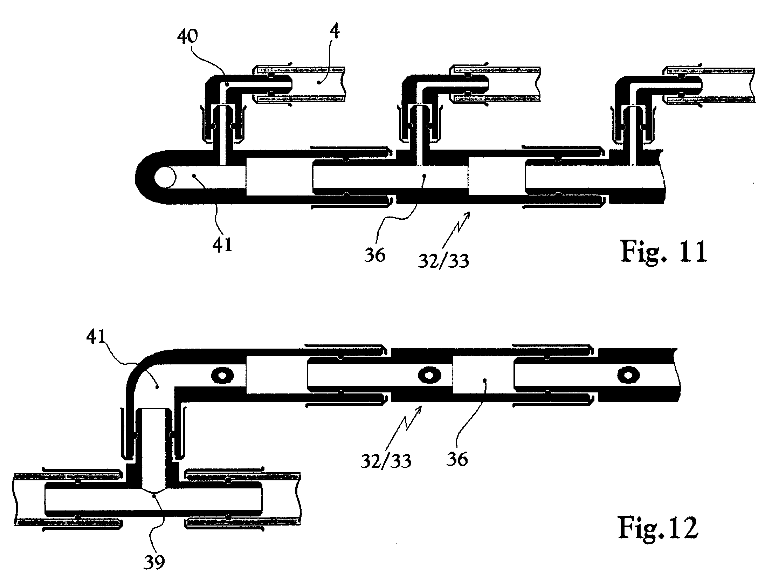

Toutefois, lorsque la pose du module est envisagée au niveau de noues ou d'arêtiers, la configuration, aux figures 11 et 12, nécessite une pièce intermédiaire d'accouplement 40 (non représentée à la figure 12) entre les conduits récupérateurs 4 et d'une part les pièces d'assemblage 36, d'autre part les pièces terminales d'assemblage 41 elles-mêmes en liaison avec des pièces de liaison 39.

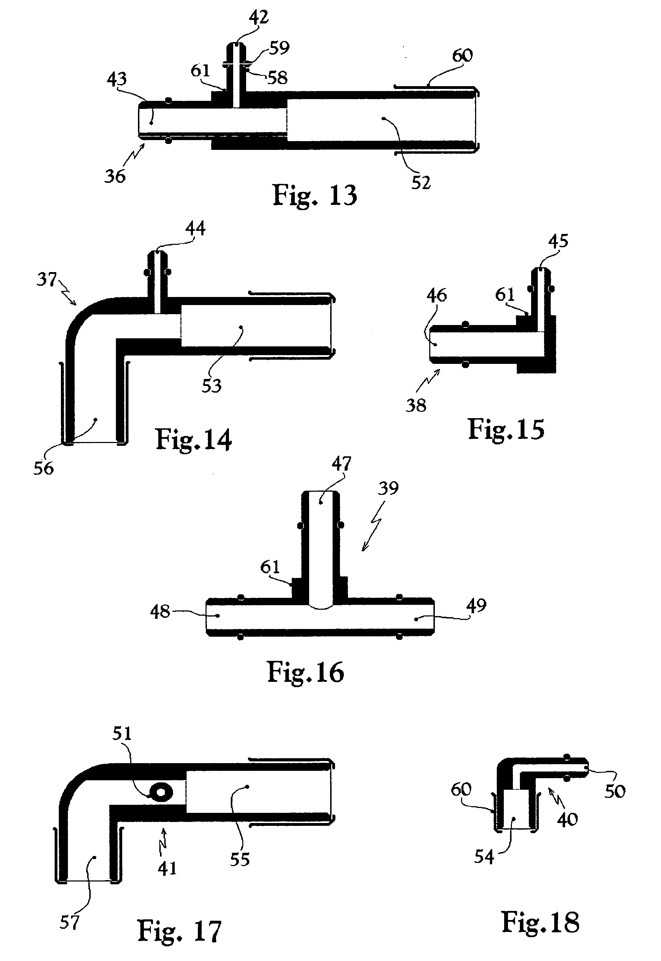

Les différentes pièces d'assemblage ou de liaison évoquées ci-dessus sont représentées individuellement aux figures 13 à 18 où l'on observe que les pièces 36 à 41 sont constituées essentiellement d'embouts mâles formant tubulures rectilignes de raccordement 42 à 51 et d'embouts femelles prenant la forme de manchons d'emboîtement rectilignes 52 à 55 ou coudés 56, 57.

Ces embouts tubulaires mâles 42 à 51 sont munis chacun d'une gorge annulaire 58 garnie d'un joint torique 59 tandis que les manchons d'emboîtement femelles 52 à 55 sont coiffés extérieurement d'une bague de sertissage 60 tel qu'indiqué à la figure 13.

On remarque également que l'angle formé par deux embouts tubulaires est occupé par un épaulement 61 formant butée, visible aux figures 13, 15 et 16.

D'autre part, le diamètre intérieur de ces différentes tubulures de raccordement est calculé en fonction à la fois de la surface du module, du nombre et de la longueur des différents conduits.

En se référant à la figure 10, on observe d'autre part que l'extrémité de l'ensemble formé par la tôle 1 et la couche thermo-isolante 2, située au niveau du conduit collecteur 32 et du conduit principal 34, subit deux dénivellements, l'un 62, destiné à libérer les extrémités des conduits récupérateurs 4 de leur rainure de logement pour une pose aisée des pièces d'assemblage faisant partie dudit conduit collecteur 32, l'autre 63, en raison de la section plus importante du conduit principal 34.

Toutefois, ce second dénivellement peut être absent, tel que représenté à la figure 4, si la section du conduit principal 34 l'y autorise.

Une configuration analogue est prévue à l'extrémité opposée de l'ensemble en question au niveau des conduits collecteurs 33 et principal 35.

Après la lecture de la description qui précède, on comprend que l'élaboration d'un dispositif collecteur d'énergie thermique selon l'invention nécessite de juxtaposer à chant, par leurs bords parallèles ou sensiblement parallèles aux conduits récupérateurs 4, le nombre nécessaire de modules collecteurs de configuration souhaitée, de fixer leurs panneaux supports les uns aux autres en une suite continue puis d'assurer, au niveau de chaque panneau support, la jonction des conduits récupérateurs 4 avec les deux conduits collecteurs 32, 33 et enfin la liaison des conduits collecteurs de chaque module avec les conduits principaux correspondants 34, 35.

La fixation entre eux de deux panneaux supports par leurs faces supérieures intervient essentiellement par engagement du crochet 30 d'un premier panneau dans la rainure d'extrémité 20 d'un second panneau.

D'autre part, lorsque la fixation entre elles de leurs faces inférieures s'opère par collage, ce qui est le cas de deux panneaux supports du genre représenté à la figure 5, la zone de retrait 14 d'un premier panneau et la zone de débordement 13 d'un second panneau sont superposées puis collées l'une à l'autre.

Dans le cas de deux panneaux supports du type rapporté à la figure 7, la fixation entre elles de leurs faces inférieures se réalise par exemple par clouage, vissage, agrafage ou encore collage de la feuille de parement 17 aux chevrons 16 alors que dans le cas du panneau support à la figure 6, la fixation entre elles des faces inférieures de deux modules de ce type est obtenue par engagement du crochet 25, d'un premier panneau dans la rainure d'extrémité 26 d'un second panneau.

De façon à éviter un maximum de solutions de continuité entre deux panneaux supports après assemblage, un moyen supplémentaire d'étanchéité peut être ajouté sous la forme par exemple d'un joint de silicone courrant le long de leurs bords transversaux juxtaposés et éventuellement collés.

La liaison des conduits récupérateurs 4 avec les conduits collecteurs 32, 33, est ensuite obtenue par emboîtement à force des tubulures de raccordement 42, 44 et 45 des pièces d'assemblage respectivement 36, 37 et 38 dans des conduits récupérateurs 4 à une de leurs extrémités en sorte que cette extrémité arrive en butée contre l'épaulement 61 ou la face extérieure d'un manchon d'emboîtement 52 et 53. Dans le même temps, les joints d'étanchéité 59 s'écrasent contre la paroi interne des conduits 4 et dans les gorges 58 assurant ainsi une étanchéité de la liaison qui est alors renforcée par serrage des bagues de sertissage 64 autour des conduits 4 tel qu'illustré à la figure 9.

Dans la cas particulier de la pièce d'assemblage 41, une jonction intermédiaire avec la pièce 40 s'avère nécessaire, tel que représenté à la figure 11, cette jonction s'opérant également par emboîtement de la tubulure de raccordement 51 dans le manchon 54 jusqu'à arriver en butée contre le manchon 55 et serrage de la bague 60. La tubulure de raccordement 50 est ensuite emboîtée dans le conduit récupérateur 4 et fixée comme décrit précédemment.

Ces opérations sont répétées à la seconde extrémité de chacun des conduits 4, les manchons 52 des pièces d'assemblage 36 ainsi posées étant orientés dans le même sens.

Selon un processus analogue, la jonction entre elles des pièces d'assemblage 37, 36 et 38 ou 40/41, 36 et 38 situées aux deux séries d'extrémités adjacentes des conduits récupérateurs 4 permet la réalisation des conduits collecteurs 32, 33 aux figures 9, 11 et 12 et la connexion de ces conduits collecteurs à des segments de conduits 65, par emboîtement de pièces de liaison 39 et serrage des bagues de sertissage 60 et 66, permet l'élaboration de conduits principaux continus respectivement 34, 35.

Les conduits collecteurs 32, 33 étant formés en fait d'un assemblage de pièces 36, 37, 38, 40 et 41, la longueur de l'emboîture des manchons 52, 53 et 55 peut être modifiée pour permettre l'ajustage de l'écartement des conduits récupérateurs 4. Par ailleurs, les diamètres intérieurs de ces manchons 52, 53 et 55 seront calculés en fonction de la longueur des conduits 4.

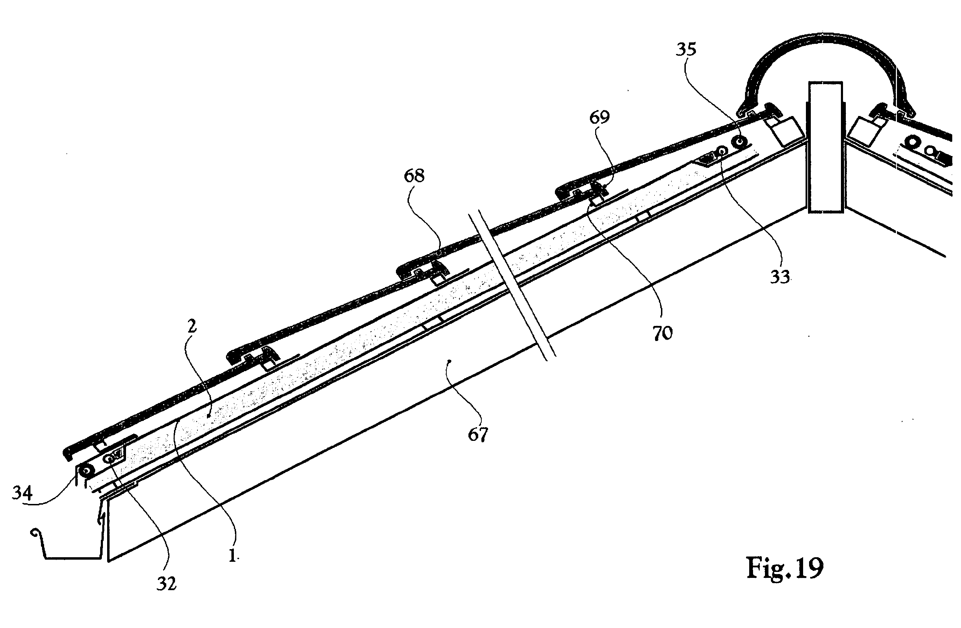

Tel que représenté aux figures 19 à 27, le dispositif collecteur d'énergie thermique peut être intégré dans des éléments de couverture porté par une charpente d'un bâtiment.

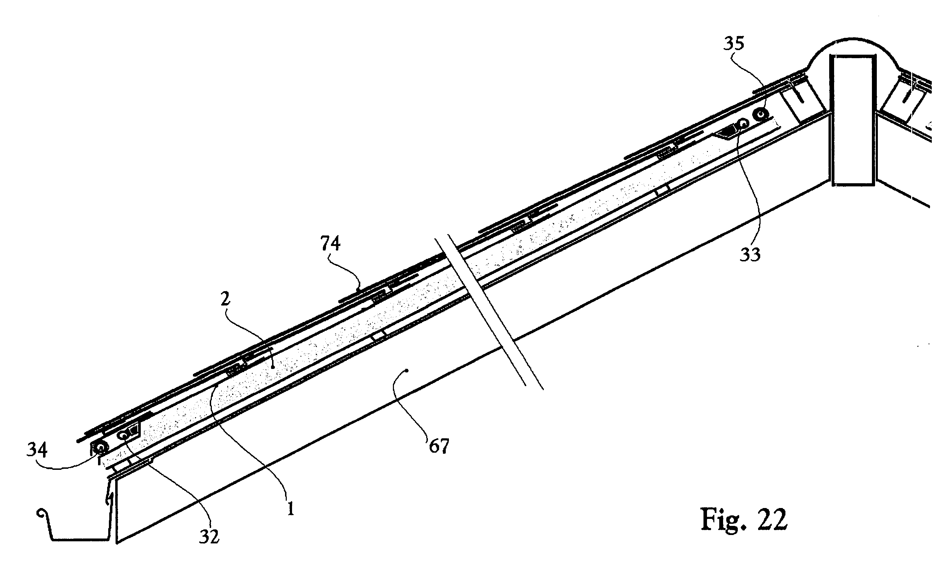

Ainsi, on a illustré aux figures 19 et 22 un toit d'un bâtiment muni d'un dispositif collecteur d'énergie thermique où l'on distingue la tôle 1 récupératrice d'énergie thermique, la couche thermo-isolante 2, les conduits collecteurs 32, 33 et les conduits principaux 34, 35, l'ensemble étant intégré à la charpente 67.

A la figure 19, la couverture est formée de tuiles 68 standard comportant un talon 69 d'un seul tenant avec la tuile elle-même. Ce talon permet, par coopération avec un moyen de retenue 70, d'assurer la fixation de cette tuile à la tôle 1 sans y pratiquer d'orifices béants, sources possibles d'infiltration d'eau de pluie et de pollution.

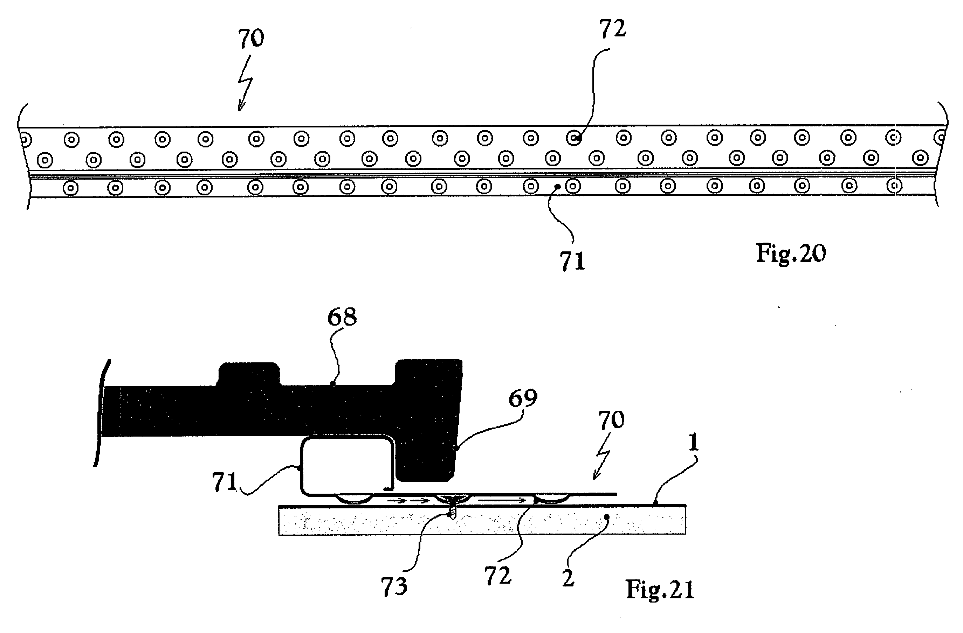

Tel qu'illustré aux figures 20 et 21, ce moyen de retenue prend la forme d'un profilé généralement métallique, de préférence en acier galvanisé, qui s'étend en un débordement longitudinal 71 formant aile repliée sur elle-même. Cette aile 71, généralement de configuration parallélépipédique épouse sensiblement le profil de l'ensemble constitué par la face inférieure de la tuile 68 prolongée par le talon 69.

D'autre part, ce moyen de retenue 70 est muni, à sa partie non repliée, d'une pluralité de déformations 72 en forme de cuvette dont la face extérieure du fond repose sur la tôle 1 laissant ainsi libre passage à l'air réchauffé et aux poussières. Par ailleurs, ces cuvettes 72 sont percées d'un orifice pour engagement d'un moyen de fixation du profilé 70 à la tôle 1 par exemple une vis auto-perçante 73.

Ainsi, après fixation de ce profilé 70 à la tôle 1, l'accrochage de la tuile 68 au dispositif collecteur d'énergie thermique s'opère simplement par pose de celle-ci sur l'aile 71 puis translation jusqu'à ce que le talon 69 arrive en butée contre cette aile 71 de manière à adopter la configuration représentée à la figure 21.

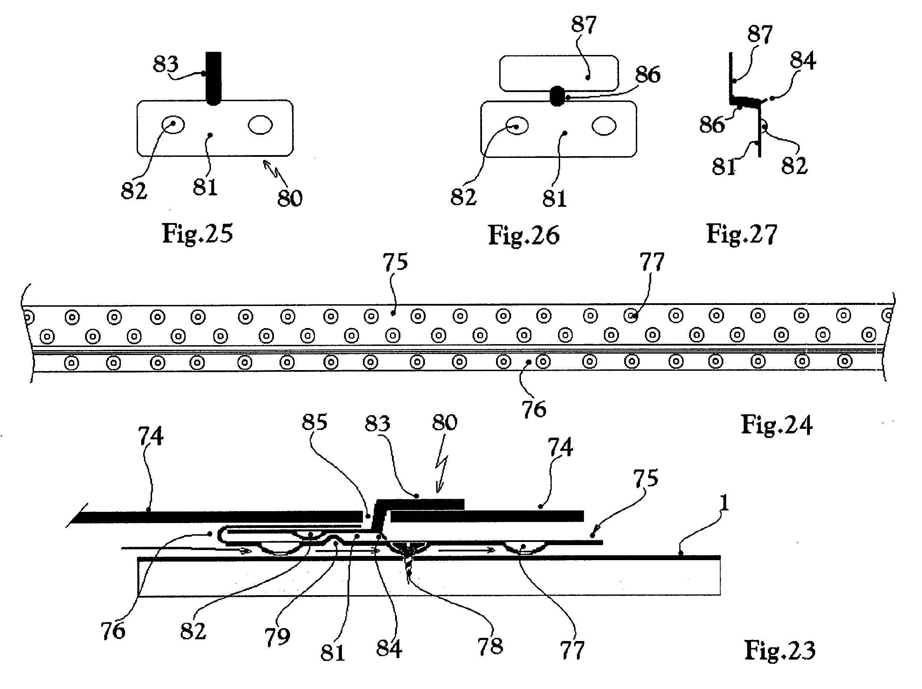

A la figure 22, la couverture est formée d'ardoises 74 fixées au dispositif collecteur d'énergie thermique par l'intermédiaire d'un moyen de retenue à double éléments, chacun des éléments et leur assemblage étant visibles aux figures 23 à 27.

Comme on le remarque aux figures 23 et 24, un premier élément ou élément inférieur 75 du moyen de retenue prend la configuration d'un profilé généralement métallique, de préférence en acier inoxydable, recourbé en forme de pince 76 en direction de l'ardoise.

D'autre part, ce profilé 75 est pourvu, à sa partie non recourbée, d'une pluralité de déformations 77 en forme de cuvette dont la face extérieure du fond repose sur la tôle 1 assurant un libre passage à l'air réchauffé et aux poussières. En outre, ces cuvettes 77 sont percées d'un orifice pour engagement d'un moyen de fixation de ce profilé 75 à la tôle 1, par exemple une vis auto-perçante 78. On observe également, à la figure 23, que le profilé 75, dans sa partie non recourbée comporte une déformation supplémentaire qui prend l'aspect d'une saillie longitudinale 79 dirigée vers et surmontée par la branche recourbée de la pince 76.

Le second élément du moyen de retenue ou élément supérieur 80, visible notamment à la figure 25, comprend, quant à lui, une lamelle 81 généralement métallique, de préférence en acier inoxydable et de longueur au plus égale à la largeur de l'ardoise. Cette lamelle, qui présente des déformations 82 en forme de cuvette, est pourvue d'une tige 83 habituellement métallique, recourbée en crochet, ainsi que d'une béquille 84.

Ainsi, après fixation à la tôle 1 de l'élément inférieur du moyen de retenue ou profilé 75, l'accrochage de l'ardoise 74 au dispositif collecteur d'énergie thermique s'opère d'abord par engagement du crochet 83 de l'élément supérieur 80 et ce, dans l'orifice 85 de l'ardoise, puis mise en place de cet élément 80 par insertion à force de la lamelle 81 entre les branches de la pince 76 et encliquetage des cuvettes 82 au-delà de la saillie 79, la béquille 84 reposant sur la tôle 1 pour rigidifier l'ensemble visible à la figure 23.

Dans le cas particulier d'une première rangée d'ardoises à poser sur un toit, l'élément supérieur du moyen de retenue est configuré tel que représenté aux figures 26 et 27 où l'on reconnaît la lamelle métallique 81, les cuvettes 82 et la béquille 84. Toutefois, le crochet 83 sous forme de tige métallique recourbée est remplacé par un crochet prenant la forme d'une tige métallique 86 fixée à un plateau 87,

Ainsi, après fixation à la tôle 1 du profilé 75, l'accrochage de l'ardoise 74 au dispositif collecteur d'énergie thermique s'effectue par engagement de la tige métallique 86 entre deux ardoises adjacentes d'une première rangée d'ardoises à poser sur un toit, en sorte que le plateau 87 repose sur la face supérieure de ces deux ardoises pour partie sur l'une et pour partie sur l'autre. La lamelle 81 est alors encliquetée entre les branches de la pince 76 comme précédemment.

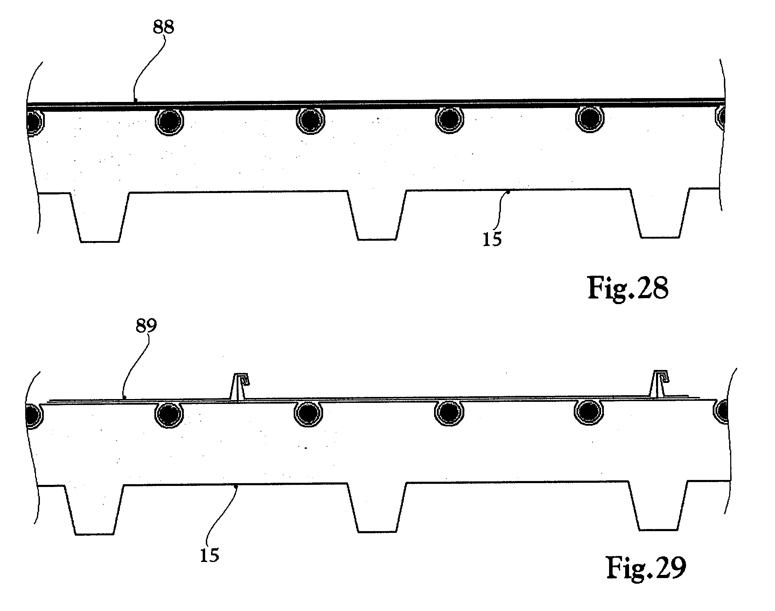

Quant aux figures 28 et 29, celles-ci montrent d'autres modes de mises en oeuvre du dispositif collecteur selon l'invention dans lesquels les différents modules intervenant dans son élaboration sont configurés en panneau de couverture auto-portant munis d'une tôle de parement 15 tel que représenté à la figure 6, la couverture étant assurée par une membrane synthétique ou bitumeuse traditionnelle 88 à la figure 28 et par une feuille de zinc 89 du type à joint debout à la figure 29.

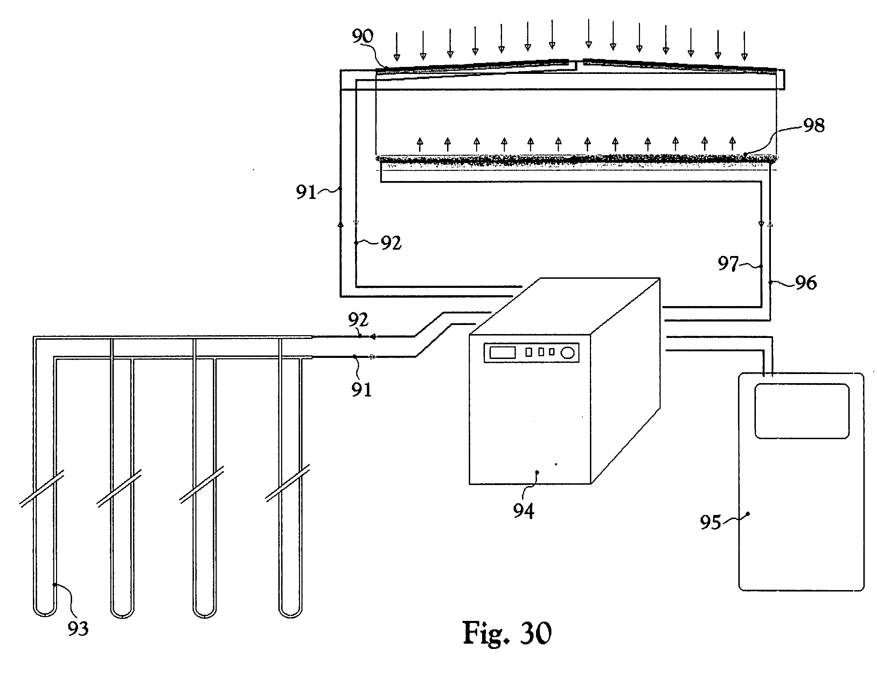

Les différents conduits intervenant dans l'élaboration du dispositif collecteur d'énergie selon l'invention étant disposés de manière à former un circuit fermé, un mode de réalisation d'une telle configuration est représenté de manière schématique à la figure 30. Celle-ci montre une toiture plate ou sensiblement plate 90 d'un bâtiment dans laquelle est intégré un dispositif selon l'invention, dispositif collecteur d'énergie thermique essentiellement d'origine solaire et/ou ambiante, dont on remarque les conduits principaux d'entrée 91 pour l'amenée de fluide froid et de sortie 92 pour la récupération de fluide réchauffé. L'énergie thermique récupérée est véhiculée et entreposée dans le sol dans des épingles géothermiques 93 par exemple en polyéthylène réticulé haute densité, disposées en parallèle ou selon toute autre configuration adéquate.

Ces conduits principaux 91 et 92 transitent par une pompe à chaleur 94, de préférence de type eau/eau capable de délivrer l'énergie thermique récupérée en vue de produire par exemple de l'eau chaude sanitaire en 95.

En se référant à la figure 30, on observe également, à partir de la pompe 94 une dérivation formée d'un conduit 96 de sortie d'eau chaude et un conduit 97 d'entrée d'eau froide, formant circuit fermé, circulant dans un revêtement de sol ou un hourdis 98 d'une pièce d'habitation ou autre de manière à en assurer le chauffage.

Par rapport aux dispositifs collecteurs d'énergie thermique antérieurs, le dispositif selon l'invention allie à la fois simplicité, efficacité et fiabilité. En raison de sa conception modulaire, le dispositif selon l'invention peut être aisément préfabriqué en usine évitant ainsi les nombreuses difficultés inhérentes à une élaboration « in situ » : seul l'assemblage des panneaux modulaires et la connexion des conduits principaux d'amenée de fluide froid et de récupération de fluide réchauffé seront assurés sur chantier.

En outre, contrairement aux panneaux solaires traditionnels, le dispositif collecteur d'énergie thermique selon l'invention est invisible à l'extérieur du bâtiment où il est posé, respectant ainsi l'esthétique de l'environnement.

## Revendications

1. Capteur d'énergie thermique, en particulier d'énergie solaire, du genre comprenant un revêtement thermo-absorbant et des moyens pour transmettre la chaleur absorbée par ledit revêtement à un fluide récupérateur d'énergie thermique circulant au voisinage de celle-ci, **caractérisé en ce qu'**un support, formé du revêtement thermo-absorbant (1) appliqué sur une face d'une couche de matériau thermo-isolant (2), comporte une rainure (3), pratiquée à partir de la face externe dudit revêtement thermo-absorbant, dans laquelle est encastré un conduit (4) du fluide récupérateur d'énergie thermique de manière à affleurer ou sensiblement affleurer la face externe du revêtement thermo-absorbant.

2. Capteur d'énergie thermique selon la revendication 1, **caractérisé en ce que** la rainure est de largeur au plus égale à celle du conduit.

3. Capteur d'énergie thermique selon la revendication 1 ou 2, **caractérisé en ce que** la face de la couche de matériau thermo-isolant opposée à la face supportant le revêtement thermo-absorbant est munie d'un revêtement de parement.

4. Module collecteur d'énergie thermique, **caractérisé en ce qu'**il réunit une pluralité de capteurs d'énergie thermique selon une des revendications 1 à 3, disposés de manière à former un ensemble unitaire, les conduits du fluide récupérateur étant branchés en parallèle entre deux conduits collecteurs (32, 33) espacés pour la circulation respectivement d'un fluide froid et d'un fluide réchauffé.

5. Module collecteur d'énergie thermique selon la revendication 4, **caractérisé en ce qu'**un panneau support formé d'un revêtement thermo-absorbant continu appliqué sur une face d'une couche continue de matériau thermo-isolant, la face opposée étant recouverte d'un revêtement de parement, comporte une pluralité de rainures pratiquées à partir de la face externe dudit revêtement thermo-absorbant, dans lesquelles sont encastrés des conduits du fluide récupérateur d'énergie thermique de manière à affleurer ou sensiblement affleurer la face externe du revêtement thermo-absorbant, lesdits conduits du fluide récupérateur étant branchés en parallèle entre deux conduits collecteurs espacés pour la circulation respectivement d'un fluide froid et d'un fluide réchauffé.

6. Module collecteur d'énergie thermique selon la revendication 4 ou 5, **caractérisé en ce que** les conduits collecteurs sont formés d'une pluralité de pièces d'assemblage (36, 37, 38, 40, 41) présentant des extrémités de configuration mâle formant tubulures de raccordement et des extrémités de configuration femelle formant manchons d'emboîtement.

7. Module collecteur d'énergie thermique selon l'une des revendications 4 à 6, **caractérisé en ce que** les extrémités des pièces d'assemblage des conduits collecteurs et les extrémités de configuration femelle des conduits récupérateurs sont munies de moyens d'étanchéité formés, dans le cas des extrémités de configuration mâle, par une gorge de verrouillage (58) répartie radialement sur la face périphérique externe de cette extrémité mâle et pourvue d'une garniture d'étanchéité (59) et, dans le cas des extrémités de configuration femelle, par des moyens de retenue (60, 64) coiffant ces extrémités.

8. Dispositif collecteur d'énergie thermique, **caractérisé en ce qu'**il est constitué d'une multiplicité de modules selon l'une des revendications 4 à 7 dont les panneaux supports sont réunis à leurs extrémités et dont les conduits collecteurs sont reliés à des conduits principaux (34, 35) pour former un circuit fermé étanche à l'intérieur duquel se trouve le fluide récupérateur qui évacue l'énergie captée.

9. Dispositif collecteur d'énergie thermique selon la revendication 8, **caractérisé en ce que** les panneaux supports des modules collecteurs sont assemblés en faisant coopérer des moyens de retenue d'un premier panneau support avec des moyens complémentaires de retenue d'un second panneau support.

10. Dispositif collecteur d'énergie thermique selon la revendication 9, **caractérisé en ce que** les panneaux supports sont assemblés par engagement d'un crochet (30) d'extrémité formé par un débordement longitudinal du revêtement thermo-absorbant d'un premier panneau support, dans une rainure d'extrémité (20) située le long d'un bord longitudinal d'un second panneau support et ménagée dans l'ensemble formé par le revêtement thermo-absorbant et la couche de matériau thermo-isolant de ce second panneau support.

11. Dispositif collecteur d'énergie thermique selon l'une des revendications 8 à 10, **caractérisé en ce que** les conduits collecteurs des modules collecteurs sont branchés en parallèle respectivement sur un conduit principal d'entrée destiné à amener le fluide froid et un conduit principal de sortie destiné à la récupération du fluide réchauffé.

12. Dispositif selon la revendication 11, **caractérisé en ce que** les conduits collecteurs sont branchés sur des sections (65) de conduits principaux par l'intermédiaire d'une pièce de liaison (39) comportant trois extrémités de configuration mâle formant tubulures de raccordement.

13. Dispositif selon la revendication 12, **caractérisé en ce que** les extrémités de la pièce de liaison sont munies de moyens d'étanchéité formés par une gorge de verrouillage (58) répartie radialement sur la face périphérique externe de cette extrémité et pourvue d'une garniture d'étanchéité (59) et **en ce que** les extrémités de configuration femelle des sections de conduit principaux sont pourvues de moyens de retenue (66) coiffant ces extrémités.

14. Dispositif collecteur d'énergie thermique selon l'une des revendications 8 à 13, **caractérisé en ce qu'**il est muni d'un moyen de retenue de tuiles (68) pourvues d'un talon (69), comprenant un profilé (70) fixé au revêtement thermo-absorbant, profilé dont l'un des bords, qui s'étend en un débordement longitudinal (71) formant aile repliée sur elle-même, supporte la tuile et est en butée contre le talon de celle-ci.

15. Dispositif collecteur d'énergie thermique selon l'une des revendications 8 à 13, **caractérisé en ce qu'**il est muni d'un moyen de retenue d'ardoises (74) pourvues d'un orifice (85), comprenant deux éléments, l'un constitué d'un profilé (75) fixé au revêtement thermo-absorbant et recourbé longitudinalement en pince (76) à deux branches, l'autre constitué d'une lamelle (81) munie d'une tige (83) pour engagement dans l'orifice de l'ardoise, cette lamelle étant destinée à être encliquetée entre les branches de la pince.
